(19) **Europäisches Patentamt / European Patent Office / Office européen des brevets**

(11) **EP 1 380 343 B1**

(12) **FASCICULE DE BREVET EUROPEEN**

(45) Date de publication et mention
de la délivrance du brevet:
**10.08.2011 Bulletin 2011/32**

(51) Int Cl.:
***B01J 31/28*** *(2006.01)* ***C10G 45/08*** *(2006.01)*

(21) Numéro de dépôt: **03291489.7**

(22) Date de dépôt: **19.06.2003**

(54) **Catalyseur d'hydrotraitement contenant un composé organique azoté et son utilisation**

Hydrotreating-Katalysator enthaltend eine Stickstoff-enthaltende organische Verbindung sowie seine Verwendung

Hydrotreating catalyst comprising a nitrogen-containing organic compound and its use

(84) Etats contractants désignés:
**BE DE DK GB NL**

(30) Priorité: **03.07.2002 FR 0208343**

(43) Date de publication de la demande:
**14.01.2004 Bulletin 2004/03**

(73) Titulaire: **Institut Français du Pétrole**
**92852 Rueil-Malmaison Cedex (FR)**

(72) Inventeurs:
• **Diehl, Fabrice**
  **92500 Rueil Malmaison (FR)**
• **Bouchy, Christophe**
  **92500 Rueil Malmaison (FR)**

• **Cseri, Tivadar**
  **92400 Courbevoie (FR)**
• **Kasztelan, Slavik**
  **92500 Rueil Malmaison (FR)**

(56) Documents cités:
EP-A- 0 181 035    EP-A- 0 482 818
WO-A-01/76741    FR-A- 2 668 951
US-A- 4 530 911    US-A- 5 891 821
US-A- 6 015 485

Remarques:
Le dossier contient des informations techniques présentées postérieurement au dépôt de la demande et ne figurant pas dans le présent fascicule.

**Description**

L'invention concerne le domaine des hydrotraitements.

Elle a principalement pour objet un catalyseur utilisable dans des procédés d'hydrotraitement, notamment dans les procédés d'hydrodésulfuration, d'hydrodésazotation, d'hydrodémétallation, d'hydrogénation et d'hydroconversion de coupes pétrolières.

Elle a également pour objet la préparation d'un tel catalyseur.

Habituellement, un catalyseur d'hydrotraitement de coupes hydrocarbonées a pour but d'éliminer les composés soufrés ou azotés contenus dans celles-ci afin de mettre par exemple un produit pétrolier aux spécifications requises (teneur en soufre, teneur en aromatiques etc..) pour une application donnée (carburant automobile, essence ou gazole, fioul domestique, carburéacteur). Il peut également s'agir de pré-traiter cette charge afin d'en éliminer les impuretés avant de lui faire subir différents procédés de transformation pour en modifier les propriétés physico-chimiques (reformage, hydrocraquage de distillats sous vide, hydroconversion de résidus atmosphériques ou sous-vide). La composition et l'utilisation des catalyseurs d'hydrotraitement sont particulièrement bien décrits dans l'article de B. S Clausen, H. T. Topsøe, et F.E. Massoth, issu de l'ouvrage Catalysis Science and Technology, volume 11 (1996), Springer-Verlag.

Le durcissement des normes de pollution automobile à l'horizon 2005 dans la communauté européenne (Off. J. Eur. Comm., L 350, 28 décembre 1998, page 58) va contraindre les raffineurs à réduire très fortement la teneur en soufre dans les gazoles et les essences (au maximum 50 parties par million poids (ppm) de soufre dans les gazoles au 1$^{er}$ janvier 2005, contre 350 ppm au 1$^{er}$ janvier 2000). Ces contraintes vont se traduire par un besoin de nouvelles unités de raffinage ou bien par une forte augmentation de l'activité à iso-volume des catalyseurs d'hydrotraitement. Un moyen efficace pour augmenter l'activité des catalyseurs est d'augmenter la quantité de phase active (habituellement du sulfure de molybdène (ou de tungstène) promu par du nickel ou du cobalt et supporté sur un support poreux de type alumine, silice, silice-alumine, etc.). Toutefois, la quantité maximale de phase active qui peut être déposée (habituellement par imprégnation à sec) est limitée par les propriétés texturales du support et en particulier sa surface spécifique et son volume poreux. Une autre solution, plus récemment évoquée dans la littérature, est l'adjonction au catalyseur d'additifs organiques qui permettrait d'améliorer son activité. C'est le cas par exemple de la demande internationale WO-A-96/41848 de la société Sumitomo Metal Mining, dans laquelle un catalyseur d'hydrotraitement est imprégné par une solution contenant un polyol constitué par une chaîne carbonée de longueur allant de 2 à 10 atomes de carbone. L'utilisation d'un tel catalyseur «additivé» augmenterait l'activité du catalyseur en hydrodésulfuration des gazoles de distillation directe en une proportion allant jusqu'à + 108 % par rapport au catalyseur non-additivé. Dans la demande de brevet EP-A-0 601 722 de la société Sumitomo Metal Mining, le déposant constate une augmentation substantielle d'activité lorsque l'additif est incorporé dans la solution d'imprégnation à sec. L'additif est, dans ce cas également, constitué par un polyol ou un polysaccharide muni d'une chaîne carbonée de 2 à 10 atomes de carbone ainsi que par leurs dérivés éthérés. Le brevet US 6 015 485 divulgue l'utilisation d'un agent chélateur choisi parmi l'EDTA et ses dérivés. Le brevet US 4 530 911 décrit la préparation d'un catalyseur d'hydroconversion utilisant une solution d'imprégnation contenant une amine soluble dans l'eau et de préférence un amino alcool. Le brevet US 5 891 821 décrit également la présence d'une amine soluble choisi parmi le MEA et l'EDTA dans la solution d'imprégnation. Le brevet FR 2 668 951 décrit un catalyseur d'hydrotraitement additivé par un composé azoté et de préférence une amine.

L'inconvénient de ces modes de préparation est l'utilisation par exemple d'éthers de glycols dont la toxicité sur l'homme est aujourd'hui démontrée. Par ailleurs, les composés de type polyols (par exemple polyéthylène glycol, saccharose en solution) possèdent des viscosités qui peuvent être élevées et se révéler incompatibles avec une imprégnation à sec, étant entendu que dans un tel procédé de préparation, il est essentiel que la solution d'imprégnation puisse facilement diffuser dans la porosité du support préformé, en particulier lorsqu'il s'agit de billes ou d'extrudés. Enfin, lors de la décomposition de ces composés sous atmosphère de sulfuration en présence d'hydrogène et d'hydrogène sulfuré à haute température et éventuellement sous pression, la formation de coke issu d'une décomposition incomplète du polyol peut être responsable d'une désactivation par empoisonnement (cokage) des sites actifs. Une perte d'activité est alors très dommageable pour la compétitivité d'un tel procédé dans la mesure où les spécifications, par exemple sur la teneur en soufre maximale, deviennent de plus en plus sévères, ce qui entraîne des contraintes élevées en terme de conditions opératoires.

L'invention propose un nouveau catalyseur d'hydrotraitement contenant au moins un élément du groupe VIB et/ou du groupe VIII de la classification périodique et éventuellement du phosphore et/ou du silicium caractérisé en ce qu'il est additivé par un composé organique consistant en le 2(2-amino éthyl amino) éthanol.

Dans les catalyseurs de l'invention, la quantité du composé organique tel que défini ci-dessus peut aller de 0,05 à 2,5 moles par mole, de préférence de 0,1 à 1 mole par mole, de métal du groupe VIB et/ou VIII déposé sur le support.

Le procédé de préparation du catalyseur additivé de la présente invention va être décrit dans la suite. Schématiquement, il est caractérisé en ce qu'il comprend une imprégnation d'un support poreux par le ou les métaux du groupe VIB et/ou VIII et le dépôt sur ledit substrat d'un composé organique de type 2(2-amino ethyl amino) ethanol, ledit composé organique étant présent dans la charge de sulfuration et étant déposé pendant l'étape de sulfuration ou en ce qu'il comprend une imprégnation simultanée du support poreux par le métal ou les métaux du groupe VIB et/ou du groupe VIII et par le composé organique 2(2-amino ethyl amino) ethanol et une étape de séchage.

Le catalyseur de la présente invention peut être préparé pour une grande part par toutes les méthodes bien connues de l'homme du métier.

La matrice généralement utilisée est à base d'alumine (en général au moins 40 % en poids d'alumine), et de préférence essentiellement constituée d'alumine ou de silice-alumine.

Les éléments hydro-déshydrogénants (des groupes VIB et/ou VIII de la classification périodique) peuvent être introduits au moins en partie lors du mélange qui sert à la mise en forme de la matrice ou bien encore et de préférence après cette mise en forme.

La mise en forme est suivie d'une étape de calcination, qui se termine entre 250 et 650 °C. Une des méthodes préférées dans la présente invention consiste à malaxer le gel humide d'alumine (oxyhydroxyde d'aluminium hydraté), puis à passer la pâte ainsi obtenue à travers une filière pour former des extrudés de diamètre compris de préférence entre 0,4 et 4 mm.

Le catalyseur renferme en outre une fonction hydrogénante. La fonction hydro-deshydrogénante est assurée par le métal du groupe VIB de la classification périodique, le molybdène et/ou le tungstène et/ou également par le métal du groupe VIII, le cobalt et/ou le nickel. Elle peut être introduite dans le catalyseur à divers niveaux de la préparation et de diverses manières. Dans le cas où une activité importante en hydrodésulfuration est souhaitée, les métaux de la fonction hydro-deshydrogénante consistent en l'association de cobalt et de molybdène; si une forte activité en hydrodésazotation est voulue, une association du nickel avec le molybdène ou le tungstène sera préférée. Elle peut être introduite en partie seulement ou en totalité au moment du malaxage avec le gel d'oxyde choisi comme matrice, le reste de l'(des )élément(s) hydrogénant(s) étant alors introduit après malaxage, et plus généralement après calcination du support préformé.

De façon préférée, le métal du groupe VIB est introduit en même temps ou juste après le métal du groupe VIII, quel que soit le mode d'introduction. Elle peut être effectuée de préférence par une ou plusieurs opérations d'échange ionique sur le support calciné ou de façon encore plus préférée par imprégnation à sec du support, à l'aide de solutions contenant les sels précurseurs des métaux.

Elle peut être effectuée par une ou plusieurs opérations d'imprégnation du support mis en forme et calciné, par une solution du (ou des) précurseur(s) de l'oxyde du métal du groupe VIII lorsque le (ou les) précurseur(s) des oxydes du métal du groupe VIB a (ont) été préalablement introduit(s) au moment du malaxage du support.

Dans le cas où les éléments sont introduits en plusieurs imprégnations des sels précurseurs correspondants, une étape de calcination intermédiaire du catalyseur est en général effectuée à une température comprise entre 250 et 500 °C. Des promoteurs d'activité du catalyseur tels que le phosphore ou le silicium peuvent également être présents. Ainsi, le phosphore ou le silicium est introduit à n'importe quel moment de la préparation. Il peut être introduit seul ou en mélange avec le métal ou les métaux du groupe VIB et/ou du groupe VIII. Il peut par exemple être introduit juste avant ou juste après la peptisation de l'oxyhydroxyde d'aluminium (boehmite) précurseur de l'alumine. Il peut aussi, par exemple, être introduit sur l'extrudé d'alumine avec ou sans calcination intermédiaire. Il peut aussi être introduit en mélange avec le métal du groupe VIB ou le métal du groupe VIII, en totalité ou en partie sur l'alumine sous forme extrudée avec ou sans calcination intermédiaire. Il peut aussi être introduit seul en dernier. Notons enfin que cette liste n'est qu'indicative, puisqu'un grand nombre de variantes peuvent être mises en oeuvre.

Comme indiqué précédemment, le procédé de préparation relatif à cette invention inclut une phase d'activation du catalyseur en présence d'un composé organique. Habituellement, les catalyseurs d'hydroraffinage sont préparés par imprégnation d'un support préformé, puis le solvant des sels métalliques (habituellement l'eau) est éliminé par séchage et enfin, il s'avère souvent nécessaire de calciner le catalyseur sous air à haute température (350 à 500 °C) afin d'éliminer les contre-ions non métalliques (nitrates, oxalates, ammonium etc.).

Avant utilisation, il est souvent nécessaire de transformer le catalyseur, où les métaux sont sous une forme oxyde, en catalyseur sulfure afin de former l'espèce active (sulfure du métal du groupe VIB promu par le métal du groupe VIII). Cette phase d'activation s'effectue sous charge réductrice en présence d'hydrogène et d'hydrogène sulfuré. Dans le procédé de préparation des catalyseurs de l'invention, il est particulièrement avantageux que cette phase d'activation se déroule en présence de l'additif organique.

Le composé organique peut-être introduit par imprégnation à sec sur le catalyseur d'hydrotraitement, ou bien encore co-imprégné simultanément avec le métal ou les métaux des groupes VIB et VIII ou bien encore être présent dans la charge de sulfuration de manière à être déposé lors de l'étape de sulfuration du catalyseur. Il peut par exemple être ajouté au composé soufré habituellement utilisé pour augmenter la teneur en soufre de la charge de sulfuration (diméthyldisulfure, diméthylsulfure, n-butylmercaptan, composé polysulfure de type tertiononylpolysulfure (par exemple TPS-37 ou TPS-54 commercialisés par la société ATOFINA).

Les catalyseurs obtenus par la présente invention sont utilisés pour l'hydroraffinage et l'hydroconversion de charges hydrocarbonées telles que les coupes pétrolières, les coupes issues du charbon ou les hydrocarbures produits à partir du gaz naturel et plus particulièrement pour l'hydrogénation, l'hydrodésazotation, l'hydrodéoxygénation, l'hydrodésaromatisation, l'hydrodésulfuration, l'hydrodémétallisation, et l'hydroconversion de charges hydrocarbonées contenant des composés aromatiques et/ou oléfiniques et/ou naphténiques et/ou paraffiniques, lesdites charges contenant éventuellement des métaux et/ou de l'azote et/ou de l'oxygène et/ou du soufre. Dans ces utilisations, les catalyseurs obtenus par la présente invention présentent une activité améliorée par rapport à l'art antérieur.

Plus particulièrement, les charges employées dans le procédé sont des essences, des gas-oils, des gas-oils sous vide, des résidus atmosphériques, des résidus sous vide, des distillats atmosphériques, des distillats sous vide, des fuels lourds, des huiles, des cires et des paraffines, des huiles usagées, des résidus ou des bruts désasphaltés, des charges provenant des procédés de conversions thermiques ou catalytiques et leurs mélanges. Elles contiennent en général des hétéroatomes tels que le soufre, l'oxygène et l'azote et/ou au moins un métal.

Comme rappelé précédemment, les catalyseurs additivés selon le mode décrit dans cette invention peuvent être utilisés dans un grand nombre d'applications d'hydroraffinage ou d'hydroconversion. Les conditions opératoires qui peuvent être appliquées dans ces procédés sont habituellement : une température de 180 à 450 °C (de façon préférée entre 250 et 440 °C), une pression de 0,5 à 30 MPa (de façon préférée entre 1 et 18 MPa), une vitesse volumique horaire de 0,1 à 20 $h^{-1}$ (de façon préférée entre 0,2 et 5 $h^{-1}$), un rapport hydrogène/charge exprimé en volume d'hydrogène, mesuré dans les conditions normales de température et pression, par volume de charge liquide généralement de 50 l/l à 2000 l/l.

Les catalyseurs de la présente invention peuvent être aussi avantageusement utilisés lors du pré-traitement des charges de craquage catalytique et en première étape d'un hydrocraquage ou d'une hydroconversion douce. Ils sont alors usuellement employés en association avec un catalyseur acide, zéolithique ou non zéolithique pour la deuxième étape du traitement.

<u>EXEMPLES</u>

Les exemples qui suivent précisent l'invention sans toutefois en limiter la portée. Pour tous les exemples de préparation de catalyseurs de la présente invention, une alumine a été utilisée comme support.

<u>Exemple 1 : Préparation d'un catalyseur C1 de type CoMoP (non-conforme à l'invention)</u>

On a utilisé une matrice composée de bochmitc tabulaire ultrafine ou gel d'alumine, commercialisée sous le nom SB3 par la société Condéa Chemie GmbH. Ce gel a été mélangé à une solution aqueuse contenant de l'acide nitrique à 66 % (7 % en poids d'acide par gramme de gel sec), puis malaxé pendant 15 minutes. A l'issue de ce malaxage, la pâte obtenue est passée à travers une filière ayant des orifices cylindriques de diamètre égal à 1,3 mm. Les extrudés sont ensuite séchés pendant une nuit à 120 °C, puis calcinés à 550 °C pendant 2 heures sous air humide contenant 7,5 % en volume d'eau. On obtient ainsi des extrudés cylindriques de 1,2 mm de diamètre, ayant une surface spécifique de 255 $m^2/g$, un volume poreux de 0,60 $cm^3/g$ et une distribution en taille de pore monomodale centrée sur 100 Å. L'analyse de la matrice par la diffraction des rayons X révèle que celle-ci est composée uniquement d'alumine gamma cubique de faible cristallinité.

Sur le support d'alumine décrit précédemment et qui se présente sous la forme « extrudé », on a ajouté du cobalt, du molybdène et du phosphore. Les sels de ces trois éléments sont introduits simultanément par imprégnation à sec du support. Le sel de cobalt utilisé est l'hydroxyde de cobalt, le précurseur de molybdène est l'oxyde de molybdène $MoO_3$ et le phosphore est introduit sous la forme d'acide phosphorique $H_3PO_4$. La solution d'imprégnation est préparée par dissolution à 90 °C, de l'oxyde de molybdène dans la solution d'acide phosphorique diluée dans l'eau de manière à obtenir un volume de solution équivalent au volume poreux de l'alumine. Après imprégnation à sec, les extrudés sont laissés à mûrir en atmosphère saturée en eau pendant 12 h, puis ils sont séchés une nuit à 120 °C et enfin calcinés à 500 °C pendant 2 heures sous air sec. Les teneurs finales en oxydes de métaux et la surface spécifique du catalyseur (déterminée selon la méthode BET bien connue de l'homme de l'Art) sont alors les suivants :

- $MoO_3$ : 18,2 (% en poids)
- CoO : 4,1 (% en poids)
- $P_2O_5$ : 5 (% en poids)
- Surface spécifique ($S_{BET}$) : 180 ($m^2/g$)

<u>Exemple 2 : Préparation d'un catalyseur C2 de type CoMoP additivé par du 2(2-amino éthyl amino) éthanol et simplement séché (conforme à l'invention)</u>

Le catalyseur C2 est préparé par réimprégnation à sec du catalyseur C1 par une solution eau + 2(2-amino éthyl amino) éthanol de telle sorte que la quantité d'additif soit de 0,75 mol/mol de Mo présent sur le catalyseur C1. Après imprégnation, les extrudés sont laissés à mûrir dans une atmosphère saturée en eau pendant 12 h, puis ils sont séchés à 120 °C pendant 2 h.

Exemple 3 : Préparation d'un catalyseur C3 de type CoMoP additivé par du 2(2-amino éthyl amino) éthanol et calciné à 500 °C (conforme à l'invention)

Le catalyseur C3 est préparé de façon identique à celle du catalyseur C2 mais on ajoute une étape de calcination à 500 °C sous air. Une analyse élémentaire par une méthode de combustion montre que le catalyseur C3 ne possède plus de carbone après sa calcination.

Exemple 4 : Préparation d'un catalyseur C4 de type CoMoP séché et additivé par du 2(2-amino éthyl amino) éthanol (conforme à l'invention)

Le catalyseur C4 est obtenu par une réimprégnation du catalyseur séché C2 par une solution eau + 2(2-amino éthyl amino) éthanol menée de telle sorte que la quantité d'additif introduit lors de cette seconde imprégnation soit de 0,75 mol/mol de Mo présent sur le catalyseur. Après une maturation de 12h, les extrudés sont séchés à 120 °C pendant 2h. Le catalyseur C4 est donc préparé par deux imprégnations successives (de la phase active, puis du composé organique) séparées entre elles par un simple séchage à 120 °C.

Exemple 5 : Essai comparatif des catalyseurs C1, C2, C3 et C4 en hydrogénation du toluène dans le cyclohexane sous pression en présence d'hydrogène sulfuré.

La description des conditions de test détaillées figure dans l'Exemple 9.
Les activités hydrogénantes volumiques relatives, déterminées après environ 3 à 4 h de stabilisation, sont reportées dans le tableau ci-dessous. Le catalyseur non additivé C1 a été choisi comme référence (base 100 % d'activité).

Tableau 1 : Activités relatives en hydrogénation des catalyseurs C1 à C4

| Catalyseur | $A_{IIYD}$ relativement à C1 |
|---|---|
| C1 | 100 |
| C2 | 142 |
| C3 | 115 |
| C4 | 131 |

On constate de façon surprenante que les catalyseurs C2, C3 et C4 préparés selon la présente invention présentent un gain d'activité important par rapport au catalyseur C1 de référence non additivé (et non conforme à la présente invention).

Exemple 6 : Préparation d'un catalyseur C5 de type NiMoP (non-conforme à l'invention).

On a imprégné à sec le support alumine par une solution aqueuse renfermant des sels de molybdène et de nickel et de l'acide phosphorique $H_3PO_4$.
Le sel de molybdène est l'heptamolybdate d'ammonium hydraté de formule $Mo_7O_{24}(NH_4)_6.4H_2O$ et celui de nickel est le nitrate de nickel hydraté de formule $Ni(NO_3)_2.6H_2O$. Après maturation à température ambiante dans une atmosphère saturée en eau, les extrudés imprégnés sont séchés pendant une nuit à 120 °C, puis calcinés à 500 °C pendant 2 heures sous air sec. La teneur finale en trioxyde de molybdène est de 16 % en poids. La teneur finale en oxyde de nickel NiO est de 3,0 %. La teneur finale en phosphore est de 6 % en poids exprimée en $P_2O_5$.

Exemple 7 : Préparation d'un catalyseur C6 de type NiMoP additivé par du 2(2-amino éthyl amino) éthanol et simplement séché (conforme à l'invention)

Le catalyseur C6 est préparé par une réimprégnation à sec du catalyseur C5 par une solution eau + 2(2-amino éthyl amino) éthanol, menée de telle sorte que la quantité d'additif soit de 0,75 mol/mol de Mo présent sur le catalyseur C5. Après imprégnation, les extrudés sont laissés à mûrir dans une atmosphère saturée en eau pendant 12 h, puis ils sont séchés à 120 °C pendant 2 h.

Exemple 8 : Préparation d'un catalyseur C7 de type NiMoP additivé par du 2(2-amino éthyl amino) éthanol et calciné à 500 °C (conforme à l'invention)

Le catalyseur C7 est préparé de façon identique à celle du catalyseur C6 mais on ajoute une étape de calcination à 500 °C sous air. Une analyse élémentaire par une méthode de combustion montre que le catalyseur C7 ne possède plus de carbone.

Exemple 9 : Tests d'hydrogénation du toluène des catalyseurs C5, C6 et C7

Les catalyseurs C5, C6 et C7, précédemment décrits, sont sulfurés in situ en dynamique dans le réacteur tubulaire à lit fixe traversé d'une unité pilote de type Catatest (constructeur : société Géomécanique), les fluides circulant de haut en bas. Les mesures d'activité hydrogénante sont effectuées immédiatement après la sulfuration sous pression sans remise à l'air avec la charge d'hydrocarbures qui a servi à sulfurer les catalyseurs.

La charge de sulfuration et de test est composée de 5,8 % de diméthyldisulfure (DMDS), 20 % de toluène et 74,2 % de cyclohexane (en poids). On mesure ainsi les activités catalytiques stabilisées de volumes égaux de catalyseurs C5, C6 et C7 dans la réaction d'hydrogénation du toluène.

Les conditions de mesure d'activité sont les suivantes :

- Pression totale : 6,0 MPa
- Pression de toluène : 0,38 MPa
- Pression de cyclohexane : 1,55 MPa
- Pression d'hydrogène : 3,64 MPa
- Pression d'$H_2S$ : 0,22 MPa
- Volume de catalyseur : 40 cm3
- Débit de charge : 80 cm3/h
- Vitesse spatiale horaire : $2 \text{ l/l/h}^{-1}$
- Débit d'hydrogène : 36 l/h
- Température de sulfuration et de test : 350°C (3°C/min)

Des prélèvements de l'effluent liquide sont analysés par chromatographie en phase gazeuse. La détermination des concentrations molaires en toluène non-converti (T) et des concentrations ses produits d'hydrogénation : le méthylcyclohexane (MCC6), l'éthylcyclopentane (EtCC5) et les diméthylcyclopentanes (DMCC5) permettent de calculer un taux d'hydrogénation de toluène $X_{HYD}$ défini par :

$$X_{HYD} (\%) = 100 * \frac{(MCCC6 + EtCC5 + DMCC5)}{(T + MCC6 + EtCC5 + DMCC5)}$$

La réaction d'hydrogénation du toluène étant d'ordre 1 dans les conditions de test mises en oeuvre et le réacteur se comportant comme un réacteur piston idéal, on calcule l'activité hydrogénante $A_{HYD}$ des catalyseurs en appliquant la formule

$$Ai = \ln(100/(100 - X_{HYD}))$$

Le Tableau 2 compare les activités hydrogénantes relatives, égales au rapport de l'activité du catalyseur considéré sur l'activité du catalyseur C5 pris comme référence (activité 100 %).

Tableau 2 : Activités relatives en hydrogénation des catalyseurs C5 à C7

| Catalyseur | $A_{HYD}$ relativement à C5 |
|---|---|
| C5 | 100 |
| C6 | 150 |
| C7 | 115 |

D'une façon surprenante, le Tableau 2 montre le gain d'activité important obtenu sur les catalyseurs préparés selon l'invention par rapport au catalyseur de référence non-additivé.

Exemple 10 : Test en hydrodésulfuration d'un gazole

Les catalyseurs C5, C6 et C7 précédemment décrits ont également été comparés en test d'hydrodésulfuration d'un gazole dont les principales caractéristiques sont données ci-après :

- Densité à 15 °C : 0,8522
- Soufre : 1,44 % en poids
- Distillation Simulée :

  • PI : 155 °C
  • 10 % : 247 °C
  • 50 % : 315 °C
  • 90 % : 392 °C
  • PF : 444 °C

Le test est mené dans un réacteur pilote isotherme à lit fixe traversé, les fluides circulant de bas en haut. Après sulfuration in situ à 350 °C dans l'unité sous pression au moyen du gazole du test auquel est additionné 2 % en poids de diméthyldisulfure, le test d'hydrodésulfuration a été conduit dans les conditions opératoires suivantes :

- Pression totale : 7 MPa
- Volume de catalyseur : 30 cm$^3$
- Température : 340 °C
- Débit d'hydrogène : 241/h
- Débit de charge : 60 cm$^3$/h

Les performances catalytiques des catalyseurs testés sont données dans le tableau suivant. Elles sont exprimées en activité relative, en posant que celle du catalyseur C5 est égale à 100 et en considérant qu'elles sont d'ordre 1,5. La relation liant l'activité et la conversion en hydrodésulfuration (%HDS) est la suivante :

$$A_{HDS} = \left[ \frac{100}{(100 - \%HDS)} \right]^{0,5} - 1$$

Tableau 3 : Activité des catalyseurs en hydrodésulfuration de gazole

| Catalyseur | $A_{HDS}$ relativement à C5 |
|---|---|
| C5 | 100 |
| C6 | 170 |
| C7 | 130 |

D'une façon surprenante, le Tableau 3 montre le gain d'activité important obtenu sur les catalyseurs préparés selon l'invention par rapport au catalyseur de référence non-additivé.

Exemple 11 : Test en hydrotraitement d'un distillat sous vide

Les catalyseurs C5, C6 et C7 précédemment décrits ont également été comparés en test d'hydrotraitement d'un distillat sous vide dont les principales caractéristiques sont données ci-après :

- Densité à 20 °C : 0,9365
- Soufre : 2,92 %en poids
- Azote total: 1400 ppm poids

- Distillation Simulée :

  • PI :          361 °C

  • 10 % :          430 °C

  • 50% :          492 °C

  • 90% :          567 °C

  • PF :          598 °C

Le test est mené dans un réacteur pilote isotherme à lit fixe traversé, les fluides circulant de bas en haut. Après sulfuration in situ à 350 °C dans l'unité sous pression au moyen d'un gazole de distillation directe auquel est additionné 2 % en poids de diméthyldisulfure, le test d'hydrotraitement a été conduit dans les conditions opératoires suivantes :

- Pression totale :          12 MPa
- Volume de catalyseur :          40 cm$^3$
- Température :          380 °C
- Débit d'hydrogène :          40 l/h
- Débit de charge :          40 cm$^3$/h

Les performances catalytiques des catalyseurs testés sont données dans le Tableau 4 suivant. Elles sont exprimées en activité relative, en posant que celle du catalyseur C5 est égale à 100 et en considérant qu'elles sont d'ordre 1,5. La relation liant l'activité et la conversion en hydrodésulfuration (%HDS) est la suivante :

$$A_{HDS} = \frac{100}{\left[(100-\%HDS)\right]}^{0,5} - 1$$

La même relation est applicable pour l'hydrodésazotation (% HDN et $A_{HDN}$).
Par ailleurs, on évalue également la conversion brute en fraction ayant un point d'ébullition inférieur à 380 °C obtenue avec chaque catalyseur. Elle est exprimée à partir des résultats de distillation simulée (méthode ASTM D86) par la relation :

$$Conversion = (\% \, 380^+ \, charge - \%380^- \, effluent)/\%380^+ charge$$

Tableau 4 : Activité des catalyseurs en hydrotraitement de distillat sous vide

| Catalyseur | $A_{HDS}$ relative à C5 | $A_{HDN}$ relative à C5 | Conversion 380°C (%) |
|---|---|---|---|
| C5 | 100 | 100 | 25 |
| C6 | 145 | 150 | 30 |
| C7 | 115 | 120 | 27 |

D'une façon surprenante, le Tableau 4 montre le gain d'activité important obtenu sur les catalyseurs préparés selon l'invention par rapport au catalyseur de référence non-additivé.

Exemple 12 : Préparation d'un catalyseur C8 de type CoMo (non-conforme à l'invention)

On a ajouté du cobalt et du molybdène sur un support alumine qui se présente sous la forme d'extrudés. Ces deux éléments sont introduits simultanément par imprégnation à sec du support. Le sel de cobalt utilisé est le nitrate de cobalt, le précurseur de molybdène étant l'heptamolybdate d'ammonium tétrahydraté. La solution d'imprégnation est préparée par dissolution de l'heptamolybdate d'ammonium dans l'eau, puis par ajout du nitrate de Co. Après imprégnation à sec, les extrudés sont laissés à mûrir en atmosphère saturée en eau pendant 12h, puis ils sont séchés une nuit à 120 °C et enfin calcinés à 500 °C pendant 2 heures sous air sec. Les teneurs finales en oxydes de métaux et la surface spécifique du catalyseur (déterminée selon la méthode BET bien connue de l'homme du métier) sont alors les suivants :

- MoO$_3$ :          17,0 % en poids
- CoO :         6,3 % en poids
- Surface spécifique (SBET):          205 m$^2$/g

Exemple 13 : Préparation d'un catalyseur C9 de type CoMo séché et additivé par du 2(2-amino éthyl amino) éthanol (conforme à l'invention)

Le catalyseur C9 est obtenu par une réimprégnation du catalyseur calciné C8 par une solution eau + 2(2-amino éthyl amino) éthanol menée de telle sorte que la quantité d'additif soit de 0,75 mol/mol de Mo présent sur le catalyseur. Après une maturation de 12 h, les extrudés sont séchés à 120 °C pendant 2 h.

Exemple 14 : Essai comparatif en hydrodésulfuration sélective d'une charge modèle type essence de FCC.

Les catalyseurs C8 et C9 précédemment décrits ont été testé dans la réaction de désulfuration sélective d'une charge modèle type essence de FCC. Le test est effectué en réacteur de type Grignard (en batch) à 200 °C sous une pression de 3,5 MPa en hydrogène maintenue constante. La charge modèle est constituée par 1000 ppm de méthyl-3 thiophène et 10 % en poids de diméthyl 2,3-butène-2 dans du n-heptane. Le volume de solution est de 210 cm$^3$ à froid, la masse de catalyseur testée étant de 4 grammes (avant sulfuration). Avant test, le catalyseur est préalablement sulfuré en banc de sulfuration, sous mélange H$_2$S/H$_2$ (4 l/h, 15 % en vol d'H$_2$S) à 500 °C durant deux heures (rampe de 5 °C/min), puis réduit sous H$_2$ pur à 200 °C durant deux heures. Le catalyseur est ensuite transféré dans le réacteur Grignard à l'abri de l'air.

La constante de vitesse (normalisée par g de catalyseur) est calculée en considérant un ordre 1 pour la réaction de désulfuration ($k_{HDS}$), et un ordre 0 pour la réaction d'hydrogénation ($k_{HDO}$). On définit la sélectivité d'un catalyseur par le rapport de ses constantes de vitesse, $k_{HDS}/k_{HDO}$. Les constantes de vitesses relatives des catalyseurs C8 et C9 ainsi que leur sélectivité sont reportées dans le Tableau 5 ci-dessous.

Tableau 5 :

| Constantes de vitesses relatives et sélectivité des catalyseurs C8 et C9 | | | |
|---|---|---|---|
| Catalyseur | $k_{HDS}$ | $k_{HDO}$ | $k_{HDS}/k_{HDO}$ |
| C8 | 1,0 | 2,32 | 0,43 |
| C9 | 1,5 | 2,72 | 0,55 |

De manière surprenante, le catalyseur C9 s'avère à la fois plus actif en désulfuration et plus sélectif que le catalyseur C8 (non conforme).

**Revendications**

1. Catalyseur d'hydrotraitement contenant au moins un élément des groupes VIB et VIII de la classification périodique et éventuellement du phosphore et/ou du silicium déposé sur un support poreux, **caractérisé en ce qu'**il est additivé par un composé organique consistant en le 2(2-amino éthyl amino) éthanol.

2. Catalyseur selon la revendication 1 **caractérisé en ce que** la quantité dudit composé organique dans le catalyseur est de 0,05 à 2,5 moles par mole de métal (métaux) du groupe VIB et/ou du groupe VIII déposé(s) sur le support.

3. Catalyseur selon la revendication 2 **caractérisé en ce que** la quantité dudit composé organique dans le catalyseur est de 0,1 à 1 mole par mole de métal (métaux) du groupe VIB et/ou du groupe VIII déposé(s) sur le support.

4. Catalyseur selon l'une des revendications 1 à 3 **caractérisé en ce que** ledit support poreux comprend au moins 40 % en poids d'alumine

5. Catalyseur selon la revendication 4 **caractérisé en ce que** ledit support poreux est essentiellement constitué d'alumine ou de silice-alumine.

**6.** Catalyseur obtenu à partir d'un catalyseur selon l'une des revendications 1 à 5 par calcination.

**7.** Catalyseur obtenu à partir d'un catalyseur selon l'une des revendications 1 à 6 par sulfuration.

**8.** Procédé de préparation d'un catalyseur additivé **caractérisé en ce qu'**il comprend une imprégnation d'un support poreux par le ou les métaux du groupe VIB et/ou VIII et le dépôt sur ledit substrat d'un composé organique de type 2(2-amino ethyl amino) ethanol, ledit composé organique étant présent dans la charge de sulfuration et étant déposé pendant l'étape de sulfuration.

**9.** Procédé de préparation d'un catalyseur additivé **caractérisé en ce qu'**il comprend successivement :

- une étape d'imprégnation du support poreux par le métal ou les métaux du groupe VIB et/ou du groupe VIII;
- une étape de séchage ; et
- une étape de dépôt du composé organique 2(2-amino ethyl amino) ethanol.

**10.** Procédé selon la revendication 9 **caractérisé en ce que** l'étape de séchage est suivie d'une étape de calcination.

**11.** Procédé selon l'une des revendications 9 ou 10 **caractérisé en ce qu'**il comprend en outre une étape de sulfuration.

**12.** Procédé de préparation d'un catalyseur additivé **caractérisé en ce qu'**il comprend successivement :

- une étape de dépôt du composé organique 2(2-amino ethyl amino) ethanol;
- une étape de séchage ; et
- une étape d'imprégnation du support poreux par le métal ou les métaux du groupe VIB et/ou du groupe VIII.

**13.** Procédé selon la revendication 12 **caractérisé en ce que** l'étape de séchage est suivie d'une étape de calcination.

**14.** Procédé selon l'une des revendications 12 ou 13 **caractérisé en ce qu'**il comprend en outre une étape de sulfuration.

**15.** Procédé de préparation d'un catalyseur additivé **caractérisé en ce qu'**il comprend une imprégnation simultanée du support poreux par le métal ou les métaux du groupe VIB et/ou du groupe VIII et par le composé organique 2 (2-amino ethyl amino) ethanol et une étape de séchage.

**16.** Procédé selon la revendication 15 **caractérisé en ce que** l'étape de séchage est suivie d'une étape de calcination.

**17.** Procédé selon l'une des revendications 15 ou 16 **caractérisé en ce qu'**il comprend en outre une étape de sulfuration.

**18.** Utilisation d'un catalyseur selon l'une des revendications 1 à 7 dans un procédé d'hydrodésulfuration, d'hydrodésazotation, d'hydrodémétallation, d'hydrogénation ou d'hydroconversion d'une coupe pétrolière.

**Claims**

**1.** Hydrotreating catalyst that contains at least one element of groups VIB and group VIII of the periodic table and optionally phosphorus and/or silicon that is deposited on a porous substrate, **characterized in that** it is used as an additive by an organic compound that consist of 2(2-amino ethyl amino)ethanol.

**2.** Catalyst according to claim 1, wherein the amount of said organic compound in the catalyst is 0.05 to 2.5 mol per mol of metal (metals) of group VIB and/or of group VIII deposited on the substrate.

**3.** Catalyst according to claim 2, wherein the amount of said organic compound in the catalyst is 0.1 to 1 mol per mol of metal (metals) of group VIB and/or group VIII deposited on the substrate.

**4.** Catalyst according to claim 1 to 3, wherein said porous substrate comprises at least 40% by weight of alumina.

**5.** Catalyst according to claim 4, wherein said porous substrate essentially consists of alumina or silica-alumina.

**6.** Catalyst that is obtained from a catalyst according to one of claims 1 to 5 by calcination.

**7.** Catalyst that is obtained from a catalyst according to one of claims 1 to 6 by sulfurization.

**8.** Process for preparation of an additivated catalyst, wherein it comprises the impregnation of a porous substrate by the metal or metals of group VIB and/or group VIII and the deposit on said substrate of the organic compound 2(2-amino ethyl amino)ethanol, said organic compound being present in the sufurization feed and being deposited during the sulfurization step.

**9.** Process for preparation of an additivated catalyst according to claim 9, wherein it comprises:

- An impregnation stage of the porous substrate by the metal or metals of group VIB and/or group VIII;
- A drying stage;
- A stage for depositing said organic compound 2(2-amino ethyl amino)ethanol.

**10.** Process according to claim 9, wherein the drying stage is followed by a calcination stage.

**11.** Process according to claim 9 or 10, wherein it further comprises a sulfurization stage.

**12.** Process for preparation of an additivated catalyst, wherein it comprises successively:

- A stage for depositing said organic compound 2(2-amino ethyl amino)ethanol;
- A drying stage; and
- A stage of impregnation of the porous substrate by the metal or metals of group VIB and/or group VIII.

**13.** Process according to claim 13, wherein the drying stage is followed by a calcination stage.

**14.** Process according to one of claims 12 or 13, wherein it also comprises a sulfurization stage.

**15.** Process for preparation of an additivated catalyst, wherein it comprises a simultaneous impregnation stage of the metal or metals of group VIB and/or of group VIII and of said organic compound 2(2-amino ethyl amino)ethanol; and a drying stage.

**16.** Process according to claim 15, wherein the drying stage is followed by a calcination stage.

**17.** Process according to one of claims 15 or 16, wherein it also comprises a sulfurization stage.

**18.** Use of a catalyst according to one of claims 1 to 7 in a process of hydrodesulfurization, hydrodenitrification, hydrodemetallization, hydrogenation or hydroconversion of a petroleum fraction.

**Patentansprüche**

**1.** Hydrobehandlungskatalysator, der mindestens ein Element der Gruppen VIB und VIII des Periodensystems und gegebenenfalls Phosphor und/oder Silicium, auf einen porösen Träger aufgebracht, enthält, **dadurch gekennzeichnet, dass** ihm eine organische Verbindung zugesetzt ist, die aus 2-(2-Aminoethylamino)ethanol besteht.

**2.** Katalysator nach Anspruch 1, **dadurch gekennzeichnet, dass** die Menge der organischen Verbindung in dem Katalysator 0,05 bis 2,5 Mol pro Mol des Metalls (der Metalle) der Gruppe VIB und/oder VIII, die auf den Träger aufgebracht wurde(n), beträgt.

**3.** Katalysator nach Anspruch 2, **dadurch gekennzeichnet, dass** die Menge der organischen Verbindung in dem Katalysator 0,1 bis 1 Mol pro Mol des Metalls (der Metalle) der Gruppe VIB und/oder VIII, die auf den Träger aufgebracht wurde(n), beträgt.

**4.** Katalysator nach einem der Ansprüche 1 bis 3, **dadurch gekennzeichnet, dass** der poröse Träger mindestens 40 Gewichts% an Aluminiumoxid enthält.

**5.** Katalysator nach Anspruch 4, **dadurch gekennzeichnet, dass** der poröse Träger im Wesentlichen aus Aluminiumoxid oder aus Siliciumdioxid/Aluminiumoxid besteht.

6. Katalysator, der ausgehend von einem Katalysator nach einem der Ansprüche 1 bis 5 durch Kalzinieren erhalten wird.

7. Katalysator, der ausgehend von einem Katalysator nach einem der Ansprüche 1 bis 6 durch Sulfurierung erhalten wird.

8. Verfahren zur Herstellung eines Katalysators mit Zusatzstoff, **dadurch gekennzeichnet, dass** es eine Tränkung eines porösen Trägers mit dem oder den Metallen der Gruppe VIB und/oder VIII und das Aufbringen einer organischen Verbindung des Typs 2-(2-Aminoethylamino)ethanol auf das Substrat umfasst, wobei die organische Verbindung in der Sulfurierungscharge vorliegt und während des Sulfurierungsschritts aufgebracht wird.

9. Verfahren zur Herstellung eines Katalysators mit Zusatzstoff, **dadurch gekennzeichnet, dass** es nacheinander Folgendes umfasst:

    - einen Schritt der Tränkung des porösen Trägers mit dem Metall oder den Metallen der Gruppe VIB und/oder der Gruppe VIII;
    - einen Trockenschritt; und
    - einen Schritt des Aufbringens der organischen Verbindung 2-(2-Aminoethylamino)ethanol.

10. Verfahren nach Anspruch 9, **dadurch gekennzeichnet, dass** auf den Trockenschritt ein Kalzinierungsschritt folgt.

11. Verfahren nach einem der Ansprüche 9 oder 10, **dadurch gekennzeichnet, dass** es darüber hinaus einen Sulfurierungsschritt umfasst.

12. Verfahren zur Herstellung eines Katalysators mit Zusatzstoff, **dadurch gekennzeichnet, dass** es nacheinander Folgendes umfasst:

    - einen Schritt des Aufbringens der organischen Verbindung 2-(2-Aminoethylamino)ethanol;
    - einen Trockenschritt; und
    - einen Schritt der Tränkung des porösen Trägers mit dem Metall oder den Metallen der Gruppe VIB und/oder der Gruppe VIII.

13. Verfahren nach Anspruch 12, **dadurch gekennzeichnet, dass** auf den Trockenschritt ein Kalzinierungsschritt folgt.

14. Verfahren nach einem der Ansprüche 12 oder 13, **dadurch gekennzeichnet, dass** es darüber hinaus einen Sulfurierungsschritt umfasst.

15. Verfahren zur Herstellung eines Katalysators mit Zusatzstoff, **dadurch gekennzeichnet, dass** es eine gleichzeitige Tränkung des porösen Träger mit dem Metall oder den Metallen der Gruppe VIB und/oder der Gruppe VIII und mit der organischen Verbindung 2-(2-Aminoethylamino)ethanol sowie einen Trockenschritt umfasst.

16. Verfahren nach Anspruch 15, **dadurch gekennzeichnet, dass** auf den Trockenschritt ein Kalzinierungsschritt folgt.

17. Verfahren nach einem der Ansprüche 15 oder 16, **dadurch gekennzeichnet, dass** es darüber hinaus einen Sulfurierungsschritt umfasst.

18. Verwendung eines Katalysators nach einem der Ansprüche 1 bis 7 in einem Verfahren zur hydrierenden Entschwefelung, zur hydrierenden Entstickung, zur hydrierenden Metallentfernung, zur Hydrierung oder zur hydrierenden Umwandlung einer Erdölfraktion.

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 9641848 A
- EP 0601722 A
- US 6015485 A

- US 4530911 A
- US 5891821 A
- FR 2668951

**Littérature non-brevet citée dans la description**

- **B. S Clausen ; H. T. Topsøe ; F.E. Massoth.** Catalysis Science and Technology. Springer-Verlag, 1996, vol. 11

- *Off. J. Eur. Comm.,* 28 Décembre 1998, vol. 350, 58